# EUROPÄISCHE PATENTANMELDUNG

(11) **EP 0 959 275 A2**
(43) Veröffentlichungstag der Anmeldung: **24.11.1999**
(21) Anmeldenummer: 99116082.1
(22) Anmeldetag: 09.03.1996
(51) Int. Cl.: F16J 15/32

(54) **Verfahren zur Herstellung eines Radialwellendichtrings**

(30) Priorität: 10.07.1995 DE 19525054
(62) Teilanmeldung aus: 96103706.6
(71) Anmelder: Firma Carl Freudenberg, 69469 Weinheim (DE)
(72) Erfinder: Reinhardt, Hans, 69469 Weinheim (DE); Vogt, Rolf, 68723 Oftersheim (DE)

(57) **Zusammenfassung**

Verfahren zur Herstellung eines Radialwellendichtrings mit einem Dichtring (1) aus polymerem Dichtungswerkstoff, der zumindest eine Dichtlippe (2) aufweist, die auf der druckabgewandten Seite mittels eines Backrings (3) auf der abzudichtenden Welle (4) abgestützt und mit einem Versteifungsring (5) unlösbar verbunden ist, wobei der Versteifungsring (5) von einem winkelförmigem Profil ist, das den Backring (3) mit einem in radialer Richtung nach innen vorspringenden Schenkel (5) zumindest teilweise übergreift und anliegend berührt, bei dem ein Versteifungsring (5) in eine Werkzeugkavität eingelegt und der verbleibende Hohlraum zur Bildung eines Dichtrings (1) mit einem verflüssigten oder pastösen, polymeren Dichtungswerkstoff ausgefüllt wird, bei dem der Dichtungswerkstoff nachfolgend verfestigt, mit dem Versteifungsring (5) verklebt und der Radialwellendichtring aus der Werkzeugkavität entnommen wird, wobei in die Werkzeugkavität zusätzlich zu dem Versteifungsring (5) ein Backring (3) in der für die bestimmungsgemäße Verwendung erforderlichen, gegenseitigen Zuordnung eingelegt und nur der danach verbleibende Freiraum mit dem Dichtungswerkstoff ausgefüllt wird, wobei dem bei der Herstellung des Backrings (3) verwendeten Hartkunststoff ein Hilfsmittel zur Verhinderung seines Verklebens mit polymeren Dichtungswerkstoff beigemischt wird.

## Beschreibung

Die Erfindung betrifft ein Verfahren zur Herstellung eines Radialwellendichtrings nach dem Oberbegriff von Anspruch 1.

Ein solches Verfahren ist aus der WO-A-94/08 161 bekannt. Der Dichtring ist aus polymerem Dichtungswerkstoff, der zumindest eine Dichtlippe aufweist, die auf der druckabgewandten Seite mittels eines Backrings auf der abzudichtenden Welle abgestützt und mit einem Versteifungsring unlösbar verbunden ist, wobei der Versteifungsring von einem winkelförmigem Profil ist, das den Backring mit einem in radialer Richtung nach innen vorspringenden Schenkel zumindest teilweise übergreift und anliegend berührt, bei dem ein Versteifungsring in eine Werkzeugkavität eingelegt und der verbleibende Hohlraum zur Bildung eines Dichtrings mit einem verflüssigten oder pastösen, polymeren Dichtungswerkstoff ausgefüllt wird, bei dem der Dichtungswerkstoff nachfolgend verfestigt, mit dem Versteifungsring verklebt und der Radialwellendichtring aus der Werkzeugkavität entnommen wird, wobei in die Werkzeugkavität zusätzlich zu dem Versteifungsring ein Backring in der für die bestimmungsgemäße Verwendung erforderlichen, gegenseitigen Zuordnung eingelegt und nur der danach verbleibende Freiraum mit dem Dichtungswerkstoff ausgefüllt wird.

Ein weiteres Verfahren ist aus der DE-OS 43 17 489 bekannt. Dabei wird ein Versteifungsring in eine Werkzeugkavität eingelegt und der verbleibende Hohlraum zur Bildung eines Dichtrings mit einem verflüssigten oder pastösen Dichtungswerkstoff ausgefüllt, wonach der Dichtungswerkstoff verfestigt, mit dem Versteifungsring verbunden und der Radialwellendichtring aus der Werkzeugkavität entnommen wird. Bei dem bekannten Verfahren wird unabhängig hiervon der eigentliche Backring erzeugt und in einem weiteren Verfahrensschritt in eine eigens dafür vorgesehene Nut des Lippenrings eingeknüpft. Diese Herstellungsweise ist umständlich und teuer.

Der Erfindung liegt die Aufgabe zugrunde, eine solches Verfahren derart weiterzuentwickeln, daß sich bei vereinfachter Herstellbarkeit deutlich verbesserte Gebrauchseigenschaften des Radialwellendichtringes ergeben.

Diese Aufgabe wird erfindungsgemäß mit den Merkmalen von Anspruch 1 gelöst.

Zur Lösung der Aufgabe ist es vorgesehen, daß dem bei der Herstellung des Backrings verwendeten Hartkunststoff ein Hilfsmittel zur Verhinderung seines Verklebens mit polymerem Dichtungswerkstoff beigemischt wird. Ein derartiges Verfahren zur Verhinderung des Verklebens des Backrings mit dem polymeren Dichtungswerkstoff des Dichtrings hat sich als besonders einfach durchführbar erwiesen.

Der Backring wird durch den Versteifungsring in axialer Richtung abgestützt, was axiale Ausweichbewegungen bei höheren Drücken verhindert und eine ausgezeichnete Führung der Dichtlippe gewährleistet. Der erfindungsgemäße Radialwellendichtring läßt sich dadurch problemlos bis zu Wellendurchmessern von 80 mm mit einem Druck des abzudichtenden Mediums von 200 bar beaufschlagen. Die Ausnehmung des den Versteifungsring während der bestimmungsgemäßen Verwendung aufnehmenden Wanddurchbruchs kann so gestaltet werden, wie in bezug auf übliche Radialwellendichtringe gebräuchlich. Dennoch ergibt sich eine ausgezeichnete und durch den Lieferanten des Radialwellendichtrings allein kontrollierbare Führung und Abstützung des Lippenringes und des Backringes unmittelbar durch Bestandteile des Versteifungsrings. Fertigungsungenauigkeiten der zumeist durch den Verwender bestimmten Toleranzen der Ausnehmung sind ohne funktionsbeeinträchtigende Auswirkung.

In die Werkzeugkavität wird zusätzlich zu dem Versteifungsring ein Backring eingebracht und auf dem radial nach innen vorstehenden Schenkel des Versteifungsringes abgelegt, wonach der verbleibende Freiraum zur Bildung des Dichtrings mit dem dazu benötigten, polymeren Dichtungswerkstoffs ausgefüllt wird. Durch das unmittelbare Anformen des Dichtrings an den zuvor bereits in die Werkzeugkavität in der für den bestimmungsgemäßen Gebrauch richtigen, gegenseitigen Zuordnung eingefügten Versteifungs- und Backring werden die Herstellungstoleranzen für beide Ringe automatisch ausgeglichen und Radialwellendichtringe erhalten, die sich durch eine optimale Maßhaltigkeit auszeichnen. Hinsichtlich der letztlich erzielten Gebrauchseigenschaften ist das von entscheidendem Vorteil.

Gute Gebrauchseigenschaften lassen sich dadurch erzielen, daß der Backring vor dem Einlegen in die Werkzeugkavität mit einem Hilfsmittel zur Verhinderung seines Verklebens mit dem den Dichtring bildenden, polymeren Dichtungswerkstoff versehen wird. Er weist bei der Anwendung eines solchen Hilfsmittels eine verbesserte Relativbeweglichkeit in bezug auf den Dichtring auf.

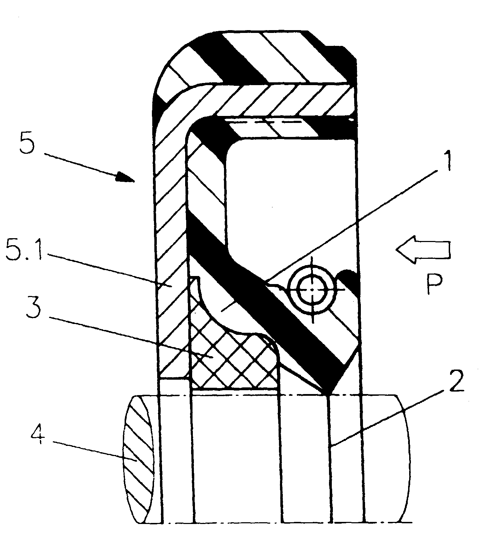

Eine beispielhafte Ausführung des erfindungsgemäßen Radialwellendichtrings ist in der Zeichnung halbgeschnitten wiedergegeben. Der Radialwellendichtring ist mit einem Dichtring 1 aus polymerem Dichtungswerkstoff versehen, beispielsweise aus Gummi, und weist eine Dichtlippe 2 auf, die auf der druckabgewandten Seite mittels eines Backrings 3 auf der abzudichtenden Welle 4 abgestützt ist. Der Dichtring ist mit einem Versteifungsring 5 aus tiefgezogenem Stahlblech unlösbar verbunden, wobei der Versteifungsring 5 von einem winkelförmigen Profil ist, das den Backring 3 mit einem in radialer Richtung nach innen vorspringenden Schenkel 5.1 teilweise übergreift und unmittelbar anliegend berührt.

Der Backring 3 besteht aus einem Hartkunststoff. Er ist so dimensioniert, daß er die während der bestimmungsgemäßen Verwendung abzudichtende Welle 4 mit leichtem Spiel umschließt. Das Spiel ist so gering bemessen, daß auch bei Drücken bis zu 200 bar aus der Richtung des eingetragenen Pfeiles kein Einpressen des Dichtungswerkstoffs in den Radialspalt zwischen dem Backring 3 und der Welle 4 zu befürchten ist.

Dem bei der Herstellung des Backrings verwendeten Hartkunststoff wurde ein Hilfsmittel zur Verhinderung seines Verklebens mit polymerem Dichtungswerkstoff beigemischt. Der Backring 3 verklebt dadurch während der Anvulkanisierung des Dichtring an dem Versteifungsring nicht mit dem Dichtring und weist in bezug auf diesen eine bessere Relativbeweglichkeit auf. Dies ist ausreichend, um der Dichtlippe 2 die beim Auftreten von Radialverlagerungen der Welle 4 erforderliche Führung zu geben. Die Dichtlippe 2 ist mittels einer Ringwendelfeder an die Oberfläche der abzudichtenden Welle 4 angepeßt. Die Ringwendelfeder 4 besteht aus Stahl.

Der erfindungsgemäße Radialwellendichtring ist bei hoher Maßhaltigkeit besonders einfach herstellbar. Er zeichnet sich darüber hinaus durch besonders gute Gebrauchseigenschaften bis zu Drücken von 200 bar aus.

## Patentansprüche

1. Verfahren zur Herstellung eines Radialwellendichtrings mit einem Dichtring (1) aus polymerem Dichtungswerkstoff, der zumindest eine Dichtlippe (2) aufweist, die auf der druckabgewandten Seite mittels eines Backrings (3) auf der abzudichtenden Welle (4) abgestützt und mit einem Versteifungsring (5) unlösbar verbunden ist, wobei der Versteifungsring (5) von einem winkelförmigem Profil ist, das den Backring (3) mit einem in radialer Richtung nach innen vorspringenden Schenkel (5) zumindest teilweise übergreift und anliegend berührt, bei dem ein Versteifungsring (5) in eine Werkzeugkavität eingelegt und der verbleibende Hohlraum zur Bildung eines Dichtrings (1) mit einem verflüssigten oder pastösen, polymeren Dichtungswerkstoff ausgefüllt wird, bei dem der Dichtungswerkstoff nachfolgend verfestigt, mit dem Versteifungsring (5) verklebt und der Radialwellendichtring aus der Werkzeugkavität entnommen wird, wobei in die Werkzeugkavität zusätzlich zu dem Versteifungsring (5) ein Backring (3) in der für die bestimmungsgemäße Verwendung erforderlichen, gegenseitigen Zuordnung eingelegt und nur der danach verbleibende Freiraum mit dem Dichtungswerkstoff ausgefüllt wird, dadurch gekennzeichnet, daß dem bei der Herstellung des Backrings (3) verwendeten Hartkunststoff ein Hilfsmittel zur Verhinderung seines Verklebens mit polymeren Dichtungswerkstoff beigemischt wird.
